# EUROPÄISCHE PATENTSCHRIFT

(11) **EP 2 648 887 B1**
(45) Veröffentlichungstag und Bekanntmachung des Hinweises auf die Patenterteilung: **16.03.2016**
(21) Anmeldenummer: 11790879.8
(22) Anmeldetag: 30.11.2011
(51) Int. Cl.: B29C 65/78, B29C 65/48, B25B 11/02, B25B 5/06, B29D 99/00

(54) **VERFAHREN UND VORRICHTUNG ZUM HERSTELLEN EINES HOLMKASTENS FÜR EIN ROTORBLATT, HOLMKASTEN**
METHOD AND DEVICE FOR PRODUCING A SPAR BOX FOR A ROTOR BLADE, AND SPAR BOX
PROCÉDÉ ET DISPOSITIF POUR LA PRODUCTION D'UN CAISSON DE LONGERON POUR UNE PALE DE ROTOR, CAISSON DE LONGERON CORRESPONDANT

(30) Priorität: 07.12.2010 DE 102010062546
(43) Veröffentlichungstag der Anmeldung: 16.10.2013
(73) Patentinhaber: Senvion GmbH, 22297 Hamburg (DE)
(72) Erfinder: EYB, Enno, 24116 Kiel (DE)
(74) Vertreter: Volmer, Jochen
(86) Internationale Anmeldenummer: PCT/EP2011/005992
(87) Internationale Veröffentlichungsnummer: WO 2012/076127

(56) Entgegenhaltungen:
- EP-A2- 0 304 571
- WO-A1-96/07533
- WO-A1-2007/048408
- WO-A1-2009/153344
- WO-A2-2009/153341
- FR-A1- 2 236 725

## Beschreibung

Die Erfindung betrifft ein Verfahren zum Herstellen eines längserstreckten Holmkastens für ein Rotorblatt einer Windenergieanlage, wobei zwei längserstreckte Gurtkörper und zwei längserstreckte Stegkörper zu dem Holmkasten zusammengefügt werden, wobei die Gurtkörper einen im Wesentlichen flachen Mittelteil und beidseitig vom Mittelteil abstehende Gurtflansche mit Verbindungsflächen aufweisen, wobei die Stegkörper seitlich angeordnete Verbindungsflächen aufweisen, die zum Verfügen mit den Verbindungsflächen der Gurtflansche angepasst sind. Die Erfindung betrifft weiter eine Vorrichtung zum Herstellen eines längserstreckten Holmkastens für ein Rotorblatt einer Windenergieanlage, der aus zwei längserstreckten Gurtkörpern und zwei längserstreckten Stegkörpern zusammengefügt wird oder zusammenfügbar ist. Schließlich betrifft die Erfindung einen längserstreckten Holmkasten, ein Rotorblatt für eine Windenergieanlage mit einem längserstreckten Holmkasten sowie eine Windenergieanlage.

Rotorblätter von Windenergieanlagen weisen eine Längserstreckung auf, können mehrere Dutzend Meter lang sein und sind starken Biegekräften durch Windbeaufschlagung ausgesetzt. Sie müssen daher eine Struktur aufweisen, die die Biegekräfte, die durch den Wind erzeugt werden, auffangen. Hierzu sind in modernen Rotorblättern üblicherweise Gurte und Stege vorhanden, die diese Querkräfte, die auf das Rotorblatt einwirken, aufnehmen und an die Rotorachse und die Lager, in denen die Rotorachse gelagert ist, weiterleiten.

Eine bekannte Konstruktionsweise von Rotorblättern besteht darin, einen längserstreckten Holmkasten herzustellen, der an seiner Oberseite und seiner Unterseite jeweils einen längserstreckten Gurtkörper aufweist, wobei die Gurtkörper an ihren seitlichen Enden jeweils mittels längserstreckten Stegen miteinander verbunden sind. Zusammen ergibt sich ein im Wesentlichen viereckiger Querschnitt des Holmkastens. Die Stege sind dabei üblicherweise eben, während die Gurte der Krümmung der aerodynamischen Flächen an der Oberseite bzw. Unterseite des Rotorblatts folgen.

Die Gurtkörper werden üblicherweise auf der Basis von Glasfasern und/oder Kohlefasern, die in einer Harzmatrix eingebettet sind, in einer Form hergestellt. Auch die Stegkörper können aus einem glasfaser- oder kohlefaserverstärktem Material bestehen.

Ein Verfahren zur Herstellung eines entsprechenden Holmkastens ist aus WO 2009/153341 A2 bekannt, deren Offenbarungsgehalt vollinhaltlich in die vorliegende Patentanmeldung aufgenommen sein soll. Darin wird in zwei Formen jeweils ein Gurtkörper mit einem im Wesentlichen flachen Mittelteil und beidseitig vom Mittelteil abstehenden Gurtflanschen mit Verbindungsflächen hergestellt. Die Gurtflansche weisen an ihren Außenseiten abgeschrägte Verbindungsflächen auf, die ebenfalls mittels der Form herstellt werden.

Es werden außerdem zwei Stegkörper geformt, die flach und längserstreckt sind und die an ihren Seiten jeweils ebenfalls abgeschrägte Verbindungsflächen aufweisen, die dazu ausgebildet sind, mit den Verbindungsflächen der Gurtkörper verfügt zu werden.

Gemäß WO 2009/153341 A2 werden zum Zusammenfügen des Holmkastens die beiden Gurtkörper übereinander positioniert und die Stegkörper von beiden Seiten so an die Gurtkörper positioniert, dass die Verbindungsflächen der Stegkörper die entsprechenden Verbindungsflächen der Gurtkörper berühren. Der Zwischenraum zwischen den Verbindungsflächen wird mit einem Verbindungsmittel, etwa einem Klebstoff wie beispielsweise Harz, gefüllt. Während des Aushärtens des Verbindungsmittels wird an allen Seiten von außen Druck auf die Gurtkörper und auf die Stegkörper ausgeübt, um das Verfügen abzusichern. Dies geschieht mittels eines Gestells, das vier Seitenflächen aufweist, die jeweils einen Gurtkörper bzw. einen Stegkörper aufnehmen. Die Seitenflächen sind mittels Scharnieren gegeneinander um die jeweilige Scharnierachse drehbar. Die zunächst flach nebeneinander liegenden Seitenflächen werden zu einer Struktur mit rechteckigem Querschnitt aufgerollt. Auf diese Weise werden die Gurtkörper und Stegkörper des Holmkastens zueinander positioniert, miteinander verklebt und verpresst. Später wird beispielsweise durch Anfügen einer Oberschale und einer Unterschale an den Holmkasten ein Rotorblatt hergestellt.

Ferner ist in FR 2 236 725 A1 ein Herstellungsverfahren für einen längserstreckten Innenteil eines Rotorblatts eines Drehflügelflugzeugs offenbart. Dabei werden zwei L-förmige und ein U-förmiges längserstrecktes Element miteinander verbunden. Zur Verklebung wird der Innenraum des von diesen Elementen umschlossenen Raums mit einer aufblasbaren Blase ausgefüllt, so dass von innen ein sich gleichmäßig über die Innenfläche verteilender Druck auf die längserstreckten Elemente und ihre Überlappungsbereiche ausgeübt wird.

Ausgehend von diesem Stand der Technik liegt der vorliegenden Erfindung die Aufgabe zugrunde, ein effizientes Verfahren und eine effiziente Vorrichtung zum Herstellen eines längserstreckten Holmkastens für ein Rotorblatt einer Windenergieanlage zur Verfügung zu stellen, wobei der Holmkasten auch im Rotorblatt herstellbar sein soll.

Diese der Erfindung zugrunde liegende Aufgabe wird durch ein Verfahren zum Herstellen eines längserstreckten Holmkastens für ein Rotorblatt einer Windenergieanlage gelöst, wobei zwei längserstreckte Gurtkörper und zwei längserstreckte Stegkörper zu dem Holmkasten zusammengefügt werden, wobei die Gurtkörper einen, insbesondere im Wesentlichen flachen, Mittelteil und beidseitig vom Mittelteil abstehende Gurtflansche mit Verbindungsflächen aufweisen, wobei die Stegkörper seitlich angeordnete Verbindungsflächen aufweisen, die zum Verfügen mit den Verbindungsflächen der Gurtflansche angepasst sind, wobei die Stegkörper beim Verfügen mit ihren Verbindungsflächen von innerhalb des Holmkastens gegen die Verbindungsflächen der Gurtflansche gepresst werden, das dadurch weitergebildet ist, dass das Verfügen unter Druckbeaufschlagung von innerhalb des Holmkastens mittels luft- oder wasserdruckbeaufschlagter Schläuche geschieht, wobei die Luft oder das Wasser beheizt ist, wobei die Schläuche vor, während und/oder nach dem Verfügen auf einer längsbeweglichen Vorrichtung in Längsrichtung des Holmkastens im Inneren des Holmkastens bewegt werden, wobei die Vorrichtung die Schläuche an den Positionen im Holmkasten aufweist, an denen die Gurtkörper und die Stegkörper miteinander verfügt werden, wobei eine Heizung für die Luft oder das Wasser vorgesehen ist.

Im Unterschied zu dem Verfahren gemäß WO 2009/153341 A2 werden somit die Stegkörper am Holmkasten nicht mehr von außen, sondern von innen an die Gurtflansche der Gurtkörper angefügt und angepresst. Dies hat den Vorteil, dass das Verfahren auch innerhalb eines Rotorblatts angewendet werden kann, da es innerhalb eines Rotorblatts nicht möglich ist, Druck von außen allseits auf den Holmkasten auszuüben. Andererseits ergibt sich eine effiziente Verfahrensführung, da zum Verpressen der im Holmkasten zur Verfügung stehende Raum verwendet wird. Dadurch lässt sich das Verfahren auf kleinem Raum ausführen. Eventuell verwendete äußere Haltekonstruktionen können einfach ausgeführt sein, da sie nicht dazu dienen, Druck von außen auf den Holmkasten auszuüben, sondern lediglich eine Haltefunktion ausüben.

Vorteilhafterweise werden wenigstens ein Grundkörper und/oder wenigstens ein Stegkörper aus mehreren Gurtteilkörpern oder Stegteilkörpern zusammengesetzt. So ist es möglich, auch lange Holmkästen in modularer Bauweise erfindungsgemäß herzustellen.

Vorzugsweise erfolgt das Verfügen mittels Verkleben. Darunter wird im Rahmen der Erfindung insbesondere ein Verkleben mit einem geeigneten Klebstoff, insbesondere einem Harz, verstanden. Es kann sich um Heißkleber oder Kaltkleber, Heißleim oder Kaltleim handeln.

Erfindungsgemäß ist vorgesehen, dass das Verfügen unter Druckbeaufschlagung innerhalb des Holmkastens geschieht, und zwar mittels luft- oder wasserbeaufschlagter Schläuche. Diese Schläuche sind im Inneren des Holmkastens entlang der Verbindungsflächen der Gurtkörper bzw. Stegkörper angeordnet und werden zum Aufbau eines Drucks mit Druckluft beaufschlagt oder mit unter Hochdruck stehendem Wasser befüllt. Dadurch vergrößern die Schläuche ihren Durchmesser und üben eine Kraft auf die mit Verbindungsmittel gefüllten Fugen zwischen den Verbindungsflächen der Gurtkörper und der Stegkörper aus.

Insbesondere in dem Fall, dass ein warm- oder heißabbindender Leim oder ein warmabbindendes Harz als Verbindungsmittel verwendet wird, ist erfindungsgemäß vorgesehen, dass die Luft oder das Wasser beheizt ist. Durch dieses Tempern wird das Aushärten des Verbindungsmittels gefördert.

Erfindungsgemäß werden die Schläuche vor, während und/oder nach dem Verfügen auf einer längsbeweglichen Vorrichtung in Längsrichtung des Holmkastens bewegt. Damit ist es einerseits möglich, die Schläuche in den Holmkasten hinein und aus dem Holmkasten hinauszubewegen. So ist es auch möglich, die längsbewegliche Vorrichtung so zu gestalten, dass sie nicht die vollständige Länge des Holmkastens aufweist. Stattdessen kann die längsbewegliche Vorrichtung im Laufe des Verfahrens abschnittsweise in den Holmkasten hinein bewegt werden und einen Abschnitt der Fugen zwischen den Verbindungsflächen der Gurtkörper und Stegkörper nach dem anderen mit Druck beaufschlagen und somit das Verfügen des Holmkastens in mehreren Schritten und sektionalen Abschnitten erfolgen.

In einer einfachen Verfahrensführung werden vorteilhafterweise die Gurtkörper und/oder die Stegkörper vor dem Herstellen des Holmkastens in Formen hergestellt, wobei insbesondere die Verbindungsflächen bei der Herstellung der Gurtkörper und/oder Stegkörper an der der Form entgegengesetzten Seite des Gurtkörpers oder Stegkörpers angeordnet sind. Es kann auch eine innere Form für die Gurtkörper verwendet werden, so dass die Verbindungsflächen der Gurtkörper ebenfalls durch Abdruck von einer Form geprägt werden. Die Variante, dass die Verbindungsflächen an der Seite der Gurtkörper bzw. Stegkörper angeordnet sind, die der Form entgegengesetzt ist, hat den Vorteil, dass die Verbindungsfläche auch bereits in der Form offenliegt.

Es ist vorzugsweise vorgesehen, dass die Gurtkörper während des Verfügens mit den Stegkörpern in ihren Formen verbleiben. Dies erspart die Notwendigkeit weiterer Haltemittel für die längserstreckten Gurtkörper. So wird ein sicheres und passgenaues Verfügen des Holmkastens erreicht.

Alternativ dazu oder zusätzlich sind Haltemittel für die Gurtkörper und/oder die Stegkörper vorgesehen, die die Gurtkörper und/oder Stegkörper während des Verfügens in der gewünschten Position halten. Die Haltemittel können Saugnäpfe zum Halten der Körper aufweisen, wobei die Saugnäpfe auf einem Haltegestell angeordnet sind.

In zwei bevorzugten Ausführungsformen erfolgt das Verfügen des Holmkastens innerhalb oder außerhalb eines Rotorblatts.

Die der Erfindung zugrunde liegende Aufgabe wird auch durch eine Vorrichtung zum Herstellen einen längserstreckten Holmkastens für ein Rotorblatt einer Windenergieanlage gelöst, der aus zwei längserstreckten Gurtkörpern und zwei längserstreckten Stegkörpern zusammengefügt wird oder zusammenfügbar ist, die sich dadurch auszeichnet, dass die Vorrichtung im Inneren des Holmkastens längsbewegbar ausgebildet ist und ab den Positionen im Holmkasten, an denen die Gurtkörper und Stegkörper miteinander verfügt werden, Fügeelemente aufweist, wobei die Fügeelemente als Luftschläuche oder Wasserschläuche ausgebildet sind, die mit Druckluft oder mit unter Druck stehendem Wasser befüllbar sind, wobei eine Heizung für die Luft oder das Wasser vorgesehen ist. Diese erfindungsgemäße längsbewegliche Vorrichtung ist insbesondere zum Einsatz in dem vorstehend beschriebenen erfindungsgemäßen Verfahren geeignet. Damit ergeben sich die gleichen Vorteile wie bei dem erfindungsgemäßen Verfahren, nämlich das Verfügen des Holmkastens auch innerhalb eines Rotorblatts zu ermöglichen sowie eine effiziente und raumsparende Verfahrensführung.

Erfindungsgemäß sind die Fügeelemente als Schläuche ausgebildet, insbesondere als Luftschläuche oder Wasserschläuche, die mit Druckluft oder mit unter Druck stehendem Wasser befüllbar sind. Diese Fügeelemente pressen sich von innen gegen die Stegkörper an der Stelle der Fugen zwischen den Verbindungsflächen der Stegkörper und der Gurtkörper, wenn sie unter Druck gesetzt werden und sich dadurch ausdehnen.

Da erfindungsgemäß eine Heizung für die Luft oder das Wasser vorgesehen ist, wird das Aushärten eines Verbindungsmittels befördert, insbesondere wenn es sich um ein heißabbindendes Verbindungsmittel handelt.

Wenn in einer vorteilhaften Weiterbildung die Vorrichtung und/oder die Schläuche segmentiert sind, ist es möglich, die verschiedenen Segmente der Vorrichtung und/oder der Schläuche einzeln oder in Kombination miteinander zu verwenden, so dass eine flexible Verfahrensführung möglich wird. Außerdem können die verschiedenen Segmente an verschiedene Querschnitte des Holmkastens in der Längserstreckung des Holmkastens angepasst werden, die üblicherweise zur Rotorblattspitze hin abnehmen.

Die der Erfindung zugrunde liegende Aufgabe wird auch durch ein Rotorblatt für eine Windenergieanlage mit einem längserstreckten Holmkasten sowie einem entsprechenden Holmkasten gelöst, der in dem erfindungsgemäßen, oben beschriebenen, Verfahren hergestellt ist. Außerdem wird die der Erfindung zugrunde liegende Aufgabe durch eine Windenergieanlage mit einem entsprechenden erfindungsgemäßen Rotorblatt gelöst.

Die zu den einzelnen Erfindungsgegenständen, d.h. dem Verfahren, der Vorrichtung, dem Holmkasten, dem Rotorblatt und der Windenergieanlage genannten Merkmale, Vorteile und Eigenschaften gelten ohne Einschränkung auch für die jeweils anderen Erfindungsgegenstände.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Ansicht eines erfindungsgemäßen Holmkastens,
- Fig. 2: schematische Darstellungen der Herstellung von Gurtkörpern und Stegkörpern eines erfindungsgemäßen Holmkastens und
- Fig. 3: eine schematische Querschnittsdarstellung durch einen erfindungsgemäß hergestellten Holmkasten.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

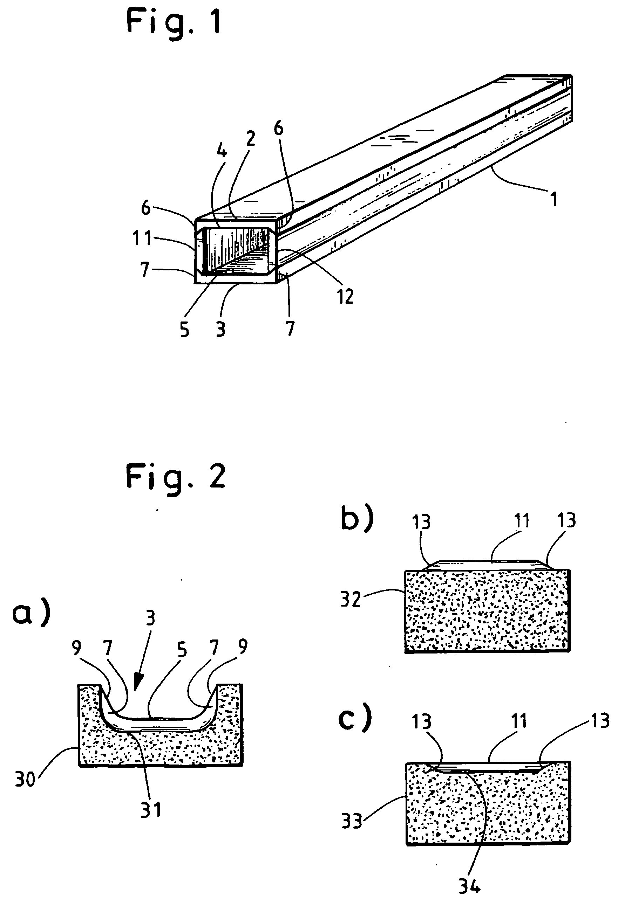

In Fig. 1 ist ein Holmkasten 1 dargestellt, der einen in der schematisierten Darstellung im Wesentlichen rechteckigen Querschnitt aufweist. Krümmungen der Oberflächen, die beispielsweise der aerodynamischen Krümmung einer Halbschale eines aerodynamischen Profils entsprechen, sind in Fig. 1 nicht dargestellt.

Der Holmkasten 1 umfasst einen oberen Gurtkörper 2 und einen unteren Gurtkörper 3 sowie zwei seitliche Stegkörper 11 und 12. Diese sind längserstreckt und erstrecken sich insbesondere über die gesamte Länge oder im Wesentlichen über die gesamte Länge eines Rotorblatts. Sie können jedoch auch in Teilkörper segmentiert sein. Die Gurtkörper 2, 3 weisen seitlich jeweils Gurtflansche 6, 7 auf, die beidseitig von einem Mittelteil 4,5 abstehen. Die Gurtflansche 6, 7 der Gurtkörper 2, 3 sind im Holmkasten 1 aufeinander zu gerichtet. Sie weisen abgeschrägte Verbindungsflächen auf. Diese befinden sich jeweils an der Innenseite des entsprechenden Flansches 6, 7.

Die Stegkörper 11, 12 weisen ebenfalls seitliche abgeschrägte Verbindungsflächen auf, die aber in der Konfiguration des Holmkasten 1 gemäß Fig. 1 erfindungsgemäß nach außen weisen. Damit passen sie zu den Verbindungsflächen der Gurtstege 6, 7.

In Fig. 2a) ist in einer schematischen Darstellung ein Querschnitt durch einen Gurtkörper 3 in seiner Herstellungsform 30 dargestellt. Die Herstellungsform 30 weist eine Mulde 31 mit einer Kontur auf, die der Querschnitts-Außenkontur des Gurtkörpers 3 entspricht. Ein Mittelteil 5 des Gurtkörpers 3 ist im Wesentlichen flach. Dies schließt ein, dass er gebogen sein kann, um einer aerodynamische Krümmung einer Halbschale des aerodynamischen Rotorblattprofils zu entsprechen. Seitlich des mittleren Teils 5 ragen zwei Gurtflansche 7 nach oben, die an ihrer Innenseite abgeschrägte Verbindungsflächen 9 aufweisen, die nicht in Kontakt mit der Herstellungsform 30 stehen. Es kann auch eine nicht dargestellte Form für die Innenseite des Gurtkörpers 3 vorgesehen sein, die vor der Herstellung des Holmkastens 1 entfernt werden muss. Damit ist eine Verbindungsfläche 9 mit größerer Präzision herstellbar.

Bei dem Gurtkörper 3 gemäß Fig. 2a) handelt es sich um einen unteren Gurtkörper 3 für eine untere Halbschale des Rotorblattprofils. Eine Herstellungsform für einen oberen Gurtkörper 3 für ein oberes Halbschalenprofil eines Rotorblatts ist entsprechend an die Krümmung der oberen Halbschale angepasst.

In den Fig. 2b) und 2c) sind zwei verschiedene Herstellungsformen 32, 33 gezeigt, auf bzw. in denen ein Stegkörper 11 hergestellt wird. Der Stegkörper 11 liegt in Fig. 2b) auf der Form 32 auf, so dass die seitlichen Verbindungsflächen 13 ebenfalls keinen Kontakt mit der Herstellungsform 32 haben. Die Stegkörper 11,12 können vorteilhafterweise in ihrem Inneren in einer Sandwichbauweise ausgestaltet sein und außen ein Laminat aufweisen.

In der Version der Fig. 2c) weist die Herstellungsform 33 eine Mulde 34 auf, die den Stegkörper 11 mitsamt den Verbindungsflächen 13 formt. Hierdurch ergibt sich eine hohe Präzision bei der Fertigung der Verbindungsfläche 13.

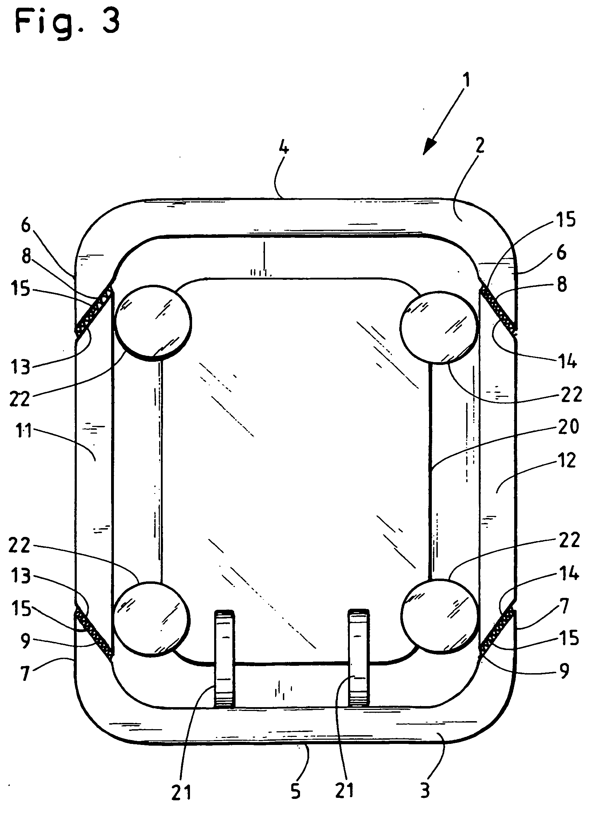

In Fig. 3 ist eine erfindungsgemäße Vorrichtung 20 in einem Holmkasten 1 gemäß der Erfindung schematisch im Querschnitt dargestellt. Im oberen Teil der Fig. 3 ist ein Gurtkörper 2 mit einem Mittelteil 4 und Gurtflanschen 6 dargestellt. Diese weisen an ihren Innenflächen abgeschrägte Verbindungsflächen 8 auf. Jeweils senkrecht schließen sich daran Stegkörper 11, 12 an, die ebenfalls jeweils abgeschrägte Verbindungsflächen 13, 14 aufweisen, die den Verbindungsflächen 8 des oberen Gurtkörpers 2 gegenüberliegen. Es entsteht eine Fuge, die mit einem Verbindungsmittel 15 gefüllt wird.

Im unteren Teil der Fig. 3 schließt sich an die Stegkörper 11, 12 mit schrägen Verbindungsflächen 13, 14 ein unterer Gurtkörper 3 an, der ebenfalls ein Mittelteil 5, seitliche Gurtflansche 7 und an den Innenseiten der Gurtflansche 7 abgeschrägte Verbindungsflächen 9 aufweist. Die Verbindungsflächen 13, 14 der Stegkörper 11, 12 liegen den Verbindungsflächen 9 des unteren Gurtkörpers 3 gegenüber. Die dazwischen liegende Fuge ist mit Verbindungsmittel 15 gefüllt.

Im Inneren des hohlen Holmkastens 1 befindet sich eine erfindungsgemäße längsbewegliche Vorrichtung 20, die auf Rollen 21 in dem Holmkasten 1 in Längsrichtung bewegbar ist. Diese weist ein Gestell auf, an dem vier Schläuche 22 seitlich außen, oben und unten so angeordnet sind, dass sie an die Stelle der jeweiligen Fugen zwischen den Verbindungsflächen 8, 9, 13, 14 positioniert sind. Diese Schläuche 22 können mit Druckluft oder unter Druck stehendem Wasser beaufschlagt werden, wodurch sie sich ausdehnen und einen Druck auf die Stegkörper 11, 12 an der Position der Verbindungsflächen 13, 14 ausüben und die Stegkörper 11,12 nach außen drücken. Damit werden die Verbindungsflächen 13, 14 der Stegkörper 11, 12 gegen die Verbindungsflächen 8, 9 der Gurtkörper 2, 3 gepresst.

Die längsbewegliche Vorrichtung 20 kann segmentiert sein, so dass, wenn der längserstreckte Holmkasten 1 vollständig mit der Vorrichtung 20 beschickt werden soll, es nicht notwendig ist, eine Vorrichtung 20 zu verwenden, die die gleiche Länge wie der Holmkasten 1 hat. Stattdessen kann ein Segment nach dem anderen in den Holmkasten 1 eingeführt werden, was den Platzbedarf zur Ausführung des erfindungsgemäßen Verfahrens wesentlich reduziert.

Nach dem Aushärten des Verbindungsmittels in den Fugen zwischen den Verbindungsflächen 8, 9, 13, 14 können die Schläuche 22 an der längsbeweglichen Vorrichtung 20 wieder aus dem Holmkasten 1 herausgezogen werden. Eine Segmentierung der Vorrichtung 20 und gegebenenfalls der Schläuche erleichtert diesen Vorgang ebenfalls.

Vorteilhafte Ausführungsformen bestehen darin, dass der Gurtkörper und/oder die Stegkörper segmentiert sind und zusammengesetzt werden. Die Stegkörper können auch in Abständen voneinander Durchgänge aufweisen, um Zugänge zum Inneren des Holmkastens zu schaffen. Der Holmkasten kann im Inneren einer oberen Halbschale und einer unteren Halbschale eines Rotorblattprofils angeordnet sein oder mit den äußeren Flächen der Gurte ein Teil des aerodynamischen Profils bilden. In diesem Fall werden nur an den Seiten der Gurtkörper weitere aerodynamische Profile angesetzt, die den Gurtkörper jeweils jedoch nicht vollständig überdecken.

Im Holmkasten können die Gurtkörper auch in ihrer Längserstreckung durch Stege bzw. quer zur Längserstreckung durch Rippenstrukturen verstärkt sein. Die Stege oder Rippen können entweder nur mit jeweils einem der Gurtkörper verbunden sein oder die beiden oberen und unteren Gurtkörper miteinander verbinden, auch abschnittsweise.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Holmkasten
- 2, 3: Gurtkörper
- 4, 5: Mittelteil
- 6, 7: seitlicher Gurtflansch
- 8, 9: Verbindungsfläche
- 11, 12: Stegkörper
- 13, 14: Verbindungsfläche
- 15: Verbindungsmittel
- 20: längsbewegliche Vorrichtung
- 21: Rolle
- 22: druckbeaufschlagbarer Schlauch
- 30: Form für einen Gurtkörper
- 31: Mulde
- 32, 33: Form für einen Stegkörper
- 34: Mulde

## Patentansprüche

1. Verfahren zum Herstellen eines längserstreckten Holmkastens (1) für ein Rotorblatt einer Windenergieanlage, wobei zwei längserstreckte Gurtkörper und zwei längserstreckte Stegkörper (11, 12) zu dem Holmkasten (1) zusammengefügt werden, wobei die Gurtkörper (2, 3) einen, insbesondere im Wesentlichen flachen, Mittelteil (4, 5) und beidseitig vom Mittelteil (4, 5) abstehende Gurtflansche (6, 7) mit Verbindungsflächen (8, 9) aufweisen, wobei die Stegkörper (11, 12) seitlich angeordnete Verbindungsflächen (13, 14) aufweisen, die zum Verfügen mit den Verbindungsflächen (8, 9) der Gurtflansche (6, 7) angepasst sind, wobei die Stegkörper (11, 12) beim Verfügen mit ihren Verbindungsflächen (13, 14) von innerhalb des Holmkastens (1) gegen die Verbindungsflächen (8, 9) der Gurtflansche (6, 7) gepresst werden, **dadurch gekennzeichnet, dass** das Verfügen unter Druckbeaufschlagung von innerhalb des Holmkastens (1) mittels luft- oder wasserdruckbeaufschlagter Schläuche (22) geschieht, wobei die Luft oder das Wasser beheizt ist, wobei die Schläuche (22) vor, während und/oder nach dem Verfügen auf einer längsbeweglichen Vorrichtung (20) in Längsrichtung des Holmkastens (1) im Inneren des Holmkastens (1) bewegt werden, wobei die Vorrichtung (20) die Schläuche (22) an den Positionen im Holmkasten (1) aufweist, an denen die Gurtkörper (2, 3) und die Stegkörper (11, 12) miteinander verfügt werden, wobei eine Heizung für die Luft oder das Wasser vorgesehen ist.

2. Verfahren nach Anspruch 1, **dadurch gekennzeichnet, dass** wenigstens ein Gurtkörper (2, 3) und/oder wenigstens ein Stegkörper (11, 12) aus mehreren Gurtteilkörpern oder Stegteilkörpern zusammengesetzt ist oder wird.

3. Verfahren nach Anspruch 1 oder 2, **dadurch gekennzeichnet, dass** das Verfügen mittels Verkleben erfolgt.

4. Verfahren nach einem der Ansprüche 1 bis 3, **dadurch gekennzeichnet, dass** die Gurtkörper (2, 3) und/oder die Stegkörper (11, 12) vor dem Herstellen des Holmkastens (1) in Formen (30, 32, 33) hergestellt werden, wobei insbesondere die Verbindungsflächen (8, 9, 13, 14) bei der Herstellung der Gurtkörper (2, 3) und/oder Stegkörper (13, 14) an der der Form (30, 32) entgegengesetzten Seite des Gurtkörpers (2, 3) oder Stegkörpers (11, 12) angeordnet sind.

5. Verfahren nach Anspruch 4, **dadurch gekennzeichnet, dass** die Gurtkörper (2, 3) während des Verfügens mit den Stegkörpern (11, 12) in ihren Formen (30) verbleiben.

6. Verfahren nach einem der Ansprüche 1 bis 5, **dadurch gekennzeichnet, dass** das Verfügen des Holmkastens (1) innerhalb oder außerhalb eines Rotorblatts erfolgt.

7. Vorrichtung (20) zum Herstellen eines längserstreckten Holmkastens (1) für ein Rotorblatt einer Windenergieanlage, der aus zwei längserstreckten Gurtkörpern (2, 3) und zwei längserstreckten Stegkörpern (11, 12) zusammengefügt wird oder zusammenfügbar ist, **dadurch gekennzeichnet, dass** die Vorrichtung (20) im Inneren des Holmkastens (1) längsbewegbar ausgebildet ist und an den Positionen im Holmkasten (1), an denen die Gurtkörper (2, 3) und die Stegkörper (11, 12) miteinander verfügt werden, Fügeelemente (22) aufweist, wobei die Fügeelemente als Luftschläuche oder Wasserschläuche ausgebildet sind, die mit Druckluft oder mit unter Druck stehendem Wasser befüllbar sind, wobei eine Heizung für die Luft oder das Wasser vorgesehen ist.

8. Vorrichtung (20) nach Anspruch 7, **dadurch gekennzeichnet, dass** die Vorrichtung (20) und/oder die Schläuche (22) segmentiert sind.

9. Längserstreckter Holmkasten (1) für ein Rotorblatt einer Windenergieanlage, der in einem Verfahren nach einem der Ansprüche 1 bis 6 hergestellt ist.

10. Rotorblatt für eine Windenergieanlage mit einem längserstreckten Holmkasten (1) nach Anspruch 9.

11. Windenergieanlage mit einem Rotorblatt nach Anspruch 10.

## Claims

1. A Method for producing a longitudinally extended spar box (1) for a rotor blade of a wind power installation, wherein two longitudinally extended belt bodies and two longitudinally extended bar bodies (11, 12) are joined together to the spar box (1), wherein the belt bodies (2, 3) have a, in particularly substantially flat, middle section (4, 5) and belt flanges (6, 7) with connecting surfaces (8,9) protruding on both sides of the middle section (4, 5), wherein the bar bodies (11, 12) have connecting surfaces (13, 14) arranged on the sides, which are adapted for joining to the connecting surfaces (8, 9) of the belt flanges (6, 7), wherein the bar bodies (11, 12) are pressed with their connecting surfaces (13,14) against the connecting surfaces (8, 9) of the belt flanges (6,7) during the joining from within the spar box (1), **characterised in that** the joining takes place under the application of pressure from within the spar box (1) by means of water-pressurised or air-pressurised hoses (22), wherein the air or the water is heated, wherein the hoses (22) are moved on a longitudinally movable device (20) in a longitudinal direction of the spar box (1) within the spar box (1) before, during and/or after the joining, wherein the device (20) has the hoses (22) in the positions in the spar box (1), in which the belt bodies (2, 3) and the bar bodies (11, 12) are to be joined to each other, wherein heating is provided for the air or the water.

2. The Method according to claim 1, **characterised in that** at least one belt body (2, 3) and/or at least one bar body (11, 12) is or becomes assembled out of a plurality of belt-part bodies or bar-part bodies.

3. The Method according to claim 1 or 2, **characterised in that** the assembly is done by means of bonding.

4. The Method according to one of claims 1 to 3, **characterised in that** the belt bodies (2, 3) and/or the bar bodies (11, 12) are produced in moulds (30, 32, 33) before the production of the spar box (1), wherein in particular the connecting surfaces (8, 9, 13, 14) are arranged on the side of the belt body (2, 3) or bar body (11, 12) opposite the mould (30 32, 33) during the production of the belt bodies (2, 3) and/or bar bodies (11, 12).

5. The Method according to claim 4, **characterised in that** the belt bodies (2, 3) remain in their moulds (30) during the joining to the bar bodies (11, 12).

6. The Method according to one of claims 1 to 5, **characterised in that** the junction of the spar box (1) takes place inside or outside a rotor blade.

7. A device (20) for producing a longitudinally extended spar box (1) for a rotor blade of a wind power installation, which is or can be joined out of two longitudinally extended belt bodies (2, 3) and two longitudinally extended bar bodies (11, 12), **characterised in that** the device (20) is formed to be movable in a longitudinal direction within the spar box (1) and has joining members (22) in the positions in the spar box, in which the belt bodies (2, 3) and the bar bodies (11, 12) are joined to each other, wherein the joining members are formed as air hoses or water hoses, which can be filled with pressurised air or pressurised water, wherein heating is provided for the air or the water.

8. The Device (20) according to claim 7, **characterised in that** the device (20) and/or the hoses (22) are segmented.

9. A longitudinally extended spar box (1) for a rotor blade of a wind power installation, which is produced in a method according to one of claims 1 to 6.

10. A rotor blade for a wind power installation, with a longitudinally extended spar box (1) according to claim 9.

11. A wind power installation with a rotor blade according to claim 10.

## Revendications

1. Procédé de fabrication d'un caisson de longeron (1) s'étendant longitudinalement, pour une pale de rotor d'une éolienne, dans lequel deux corps de ceinture s'étendant longitudinalement et deux corps de liaison (11, 12) s'étendant longitudinalement sont reliés entre eux pour former le caisson de longeron (1), les corps de ceinture (2, 3) comprenant une partie centrale (4, 5), en particulier essentiellement plate, et des brides de ceinture (6, 7) faisant saillie des deux côtés de la partie centrale (4, 5) et ayant des surfaces de raccordement (8, 9), les corps de liaison (11, 12) comprenant des surfaces de liaison (13, 14) disposées latéralement, qui sont adaptées pour venir en liaison avec les surfaces de raccordement (8, 9) des brides de ceinture (6, 7), les corps de liaison (11, 12), lorsqu'ils ont leurs surfaces de raccordement (13, 14) situées à l'intérieur du caisson de longeron (1), sont pressés contre les surfaces de raccordement (8, 9) des brides de ceinture (6, 7), **caractérisé en ce que** la pression est exercée depuis l'intérieur du caisson de longeron (1) au moyen de tuyaux (22) d'amenée d'eau ou d'air, l'air ou l'eau étant chauffés, le tube (22), avant, pendant et / ou après la liaison, étant déplacé sur un dispositif (20) mobile longitudinalement dans la direction longitudinale du caisson de longeron (1) à l'intérieur du caisson de longeron (1), ledit dispositif (20) comprenant des tuyaux (22) en des positions du caisson de longeron (1) dans lesquelles les corps de ceinture (2, 3) et les corps de liaison (11, 12) sont reliés entre eux, un dispositif de chauffage pour l'air ou l'eau étant prévu.

2. Procédé selon la revendication 1, **caractérisé en ce qu'**au moins un corps de ceinture (2, 3) et / ou au moins un corps de liaison (11, 12) est composé ou est apte à être composé de plusieurs parties de corps de ceinture ou parties de corps de liaison.

3. Procédé selon la revendication 1 ou la revendication 2, **caractérisé en ce que** la liaison est effectuée au moyen d'un collage.

4. Procédé selon l'une quelconque des revendications 1 à 3, **caractérisé en ce que** les corps de ceinture (2, 3) et / ou les corps de liaison (11, 12) sont produits avant la fabrication du caisson de longeron (1) dans des moules (30, 32, 33), des surfaces de raccordement (8, 9, 13, 14) étant en particulier aménagées dans le moule (30, 32) sur des côtés opposés des corps de ceinture (2, 3) ou des corps de liaison (11, 12) au cours de la production des corps de ceinture (2, 3) et / ou des corps de liaison (11, 12).

5. Procédé selon la revendication 4, **caractérisé en ce que** les corps de ceinture (2, 3) restent dans leurs moules (30) pendant que la liaison avec les corps de liaison (11, 12) est réalisée.

6. Procédé selon l'une quelconque des revendications 1 à 5, **caractérisé en ce que** la disposition du caisson de longeron (1) est effectuée à l'intérieur ou à l'extérieur d'une pale de rotor.

7. Dispositif (20) pour fabriquer un caisson de longeron longitudinal (1) pour une pale de rotor d'une installation d'énergie éolienne qui se compose de deux corps de ceinture (2, 3) s'étendant longitudinalement et deux corps de liaison (11, 12) s'étendant longitudinalement, assemblés ou aptes à être assemblés, **caractérisé en ce que** le dispositif (20) est mobile longitudinalement à l'intérieur du caisson de longeron (1) et **en ce qu'**il comprend des éléments de liaison (22) en des positions du caisson de longeron (1) dans lesquelles les corps de ceinture (2, 3) et les corps de liaison (11, 12) sont reliés entre eux, les éléments de liaison étant réalisés sous forme de tuyaux d'air ou d'eau qui sont aptes à être remplis d'air comprimé ou d'eau sous pression, un dispositif de chauffage de l'air ou de l'eau étant prévu.

8. Dispositif (20) selon la revendication 7, **caractérisé en ce que** le dispositif (20) et / ou les tuyaux (22) sont segmentés.

9. Caisson de longeron longitudinal (1) pour une pale de rotor d'une éolienne, produite par un procédé selon l'une quelconque des revendications 1 à 6.

10. Pale de rotor pour une installation d'énergie éolienne incluant un caisson de longeron longitudinal (1) selon la revendication 9.

11. Installation éolienne ayant une pale de rotor selon la revendication 10.
